# EUROPÄISCHE PATENTSCHRIFT

(11) **EP 3 494 794 B1**
(45) Veröffentlichungstag und Bekanntmachung des Hinweises auf die Patenterteilung: **09.09.2020**
(21) Anmeldenummer: 18210456.2
(22) Anmeldetag: 05.12.2018
(51) Int. Cl.: A21C 11/16

(54) **VORRICHTUNG UND VERFAHREN ZUR KONTINUIERLICHEN HERSTELLUNG FORMSTABILER AUFGESCHÄUMTER LEBENSMITTEL**
METHOD AND DEVICE FOR CONTINUOUS PRODUCTION OF DIMENSIONALLY STABLE FOAMED FOOD
DISPOSITIF ET PROCÉDÉ DE FABRICATION EN CONTINU DE DENRÉES ALIMENTAIRES EXPANSIBLES DE FORME STABLE

(30) Priorität: 06.12.2017 DE 102017222096
(43) Veröffentlichungstag der Anmeldung: 12.06.2019
(73) Patentinhaber: Deutsches Institut für Lebensmitteltechnik e.V., 49610 Quakenbrück (DE)
(72) Erfinder: Volker, Lammers, 49610 Quakenbrück (DE); Volker, Heinz, 49610 Quakenbrück (DE)
(74) Vertreter: Taruttis, Stefan Georg

(56) Entgegenhaltungen:
- WO-A1-95/18543
- WO-A1-2011/062499
- WO-A1-2017/081271
- GB-A- 1 086 544
- JP-A- H01 171 437

## Beschreibung

Die vorliegende Erfindung betrifft eine Vorrichtung und ein damit durchführbares Verfahren zur Herstellung formstabiler aufgeschäumter Lebensmittel aus einer stärkehaltigen rohen Lebensmittelmasse, die auch als roher Teig bezeichnet wird, die fließfähig bzw. pumpfähig ist, durch kontinuierliches Erwärmen. Die stärkehaltige rohe Lebensmittelmasse bzw. der Teig, wird bis auf eine Temperatur erwärmt, bei der er zum Ausformen stabil ist. Das Verfahren hat den Vorteil, auch aus rohem Teig, der vor der Erwärmung keine ausreichende Stabilität aufweist, durch die Erwärmung ein formstabiles aufgeschäumtes Lebensmittel herzustellen. Der Teig kann z.B. ein stärkehaltiger Teig bzw. ein Teig auf Stärkebasis sein, dessen Gehalt an Protein, z.B. an Gluten, zu niedrig ist, um in dem rohen Teig eine Struktur mit Gasblasen zu erhalten.

### Stand der Technik

Die US 6,399,130 B2 beschreibt Verfahren und Vorrichtung zur Herstellung von Brotkrumen durch Ausformen eines Brotteigs zu einem Band, das durch unterschiedlich schnelle

Förderbänder in eine Wellenform geformt wird und anschließend durch einen Ofen gefördert wird, der den Teig mittels einer Radiofrequenz erwärmen soll.

Die WO 95/18543 A beschreibt zur Herstellung von Lebensmitteln mit Fasern die Erwärmung eines Teigs mittels Mikrowellen oder durch Anlegen elektrischen Stroms in einem Rohr, dessen Querschnitt sich entlang des Strömungswegs verringert, wobei sich der Teig im inneren Querschnitt stärker erwärmt als angrenzend an die Rohrwandung.

Die EP 2741616 B1 beschreibt die Erwärmung von Lebensmitteln durch Beaufschlagung mit Strom von gesteuerten Elektrodensegmenten, wobei das Lebensmittel zwischen Elektrodensegmenten hindurch bewegt werden kann, die seinen Umfang umfassen.

Die WO 2017/081271 A1 beschreibt das Einmischen und Lösen eines der wasserlöslichen Gase CO₂ oder N₂O in Gebäckteig bei einem Druck unterhalb kritischer Bedingungen und anschließendes Aufschäumen durch Entspannen mittels einer Düse. Der erhaltene aufgeschäumte Teig wird anschließend in Backformen gebacken.

### Aufgabe der Erfindung

Der Erfindung stellt sich die Aufgabe, ein alternatives Verfahren zur Herstellung eines porenhaltigen Lebensmittels und eine zur Durchführung des Verfahrens geeignete alternative Vorrichtung bereitzustellen. Bevorzugt ist das Verfahren geeignet, durch Erwärmen ein porenhaltiges Lebensmittel aus rohem Teig herzustellen, der vor dem Erwärmen keine ausreichende Stabilität zum Halten von Gasblasen aufweist, insbesondere aus rohem Teig, der durch einen zu geringen Proteingehalt keine Stabilität aufweist, insbesondere für glutenfreien Teig auf Stärkebasis.

### Beschreibung der Erfindung

Die Erfindung löst die Aufgabe mit den Merkmalen der unabhängigen Ansprüche. Die abhängigen Ansprüche beschreiben optionale Ausführungsformen der Erfindung.

Bevorzugt weist der Teig, der die Matrix bildet, einen Proteingehalt auf, der so gering ist, dass der rohe stärkehaltige Teig keine Stabilität aufweist, die ausreicht, Gasblasen zu halten, insbesondere keine Stabilität, die ausreicht, Gasblasen in ihrer Verteilung und Größe für zumindest 10 min oder für zumindest 5 min zu erhalten. Optional ist der Proteingehalt des rohen Teigs so niedrig, dass der rohe Teig glutenfrei ist und z.B. auch kein zugesetztes Protein enthält. Das Verfahren zeichnet sich dadurch aus, dass der Teig fließfähig ist, mit Druckgas vermischt ist und durch eine Düse in einen angrenzenden Durchflusskanal entspannt wird, so dass der das Druckgas enthaltende rohe Teig in dem Durchflusskanal aufschäumt. Das Vermischen des Druckgases erfolgt unter Druck, bevorzugt bei 5 bis 60 bar, bevorzugt bei 10 bis 30 bar. Die Menge des Druckgases ergibt sich aus dem angestrebten Porenanteil, z.B. 40 Vol.-% bis 60 Vol.-%, bei Umgebungsdruck. Bevorzugt ist der Querschnitt des Durchflusskanals und der Querschnitt der Düse, optional eine Fördereinrichtung oder ein Ventil zum Fördern des Teigs durch die Düse in den Durchflusskanal, so eingerichtet, dass der mit dem Druckgas vermischte Teig mit einer Rate des Druckabfalls von zumindest 60 bar/min über die Düse bzw. in den Durchflusskanal entspannt wird. Zur Steuerung der Entspannungsrate des aufgeschäumten Teigs bei dessen Durchtritt durch die Düse in den Durchflusskanal kann eine Fördereinrichtung und/oder ein Ventil vor der Düse angeordnet sein, um die Strömungsrate des Teigs durch die Düse auf eine Rate von zumindest 60 bar/min zu steuern. Generell kann ein Ventil ein Druckhalteventil sein, das bevorzugt gesteuert ist.

Der Durchflusskanal weist zum Erwärmen des aufgeschäumten Teigs einen Abschnitt auf, der sich unmittelbar anschließt und zumindest zwei an seinem Umfang angeordnete Elektroden aufweist, um den aufgeschäumten Teig mit Strom zu beaufschlagen. Das Beaufschlagen des aufgeschäumten Teigs mit Strom führt zu einer Erwärmung des aufgeschäumten Teigs über den Querschnitt des Durchflusskanals, die ausreichend schnell erfolgt, um eine für das Entformen ausreichende Stabilität zu erzeugen. Die Erwärmung durch Beaufschlagen der Elektroden mit Strom erfolgt z.B. bis zum Erreichen einer Temperatur, bei der die Stärke des Teigs verkleistert und/oder bis zu einer Temperatur, bei der das Protein des Teigs denaturiert, um die für das Entformen ausreichende Stabilität zu erzeugen. Optional wird der Teig auf eine Temperatur im Bereich von 72°C bis 120 °C erwärmt, z.B. auf 90 bis 100°C. Bevorzugt werden die Elektroden mit Strom einer Leistung beaufschlagt, die für das Erwärmen des Teigs auf eine solche Temperatur innerhalb von maximal 30 s bis 5 min, bevorzugt innerhalb maximal 2 min oder maximal 1 min ausreicht. Eine solche elektrische Leistung kann z.B. im Bereich von 0,5 bis 5 kW liegen.

Der Teig wird bevorzugt mit einer Geschwindigkeit von 0,05 bis 10 m/s durch den Abschnitt des Durchflusskanals bewegt, in dem die Elektroden angeordnet sind. Eine solche Geschwindigkeit, die durch eine Fördereinrichtung zum Fördern des Teigs durch die Düse oder durch ein Ventil, das vor der Düse angeordnet ist, gesteuert werden kann, verringert oder verhindert Anhaftungen insbesondere an den Elektroden und/oder in dem anschließenden Abschnitt des Durchflusskanals.

Die Bewegung des Teigs in dem Durchflusskanal kann durch die Fördereinrichtung angetrieben sein, die stromaufwärts der Düse angeordnet ist. Die Fördereinrichtung kann eine Pumpe und/oder eine angeschlossene Druckgasquelle sein, optional in Verbindung mit einem gesteuerten Ventil.

Eine für das Entformen ausreichende Stabilität ist eine, bei der das porenhaltige Lebensmittel nach Kühlen auf 20 °C oder auf 5 °C formstabil bleibt, z.B. nach Kühlen direkt im Anschluß an die Erwärmung, bevorzugt für zumindest 2 d in einer Atmosphäre formstabil ist, in der das Lebensmittel nicht trocknet und bevorzugt keine zusätzliche Feuchtigkeit aufnimmt. Eine ausreichende Formstabilität ist z.B. eine, bei der das porenhaltige Lebensmittel bei 20°C bei Belastung mit einem Gewicht von 420 g und einer flachen runden Auflagefläche mit einem Durchmesser von 3,5 cm bei einer Dimension des Lebensmittels von 5 x 5 x 5 cm um maximal 10%, bevorzugt um maximal 5%, bevorzugt elastisch, eingedrückt wird.

Die Temperatur, bei der Stärke in einem Teig geliert, liegt im Bereich von 50 bis 90°C, bevorzugt von 60 bis 70 °C.

Ein stärkehaltiger Teig und das daraus hergestellte porenhaltige Lebensmittel weist bevorzugt einen Porenanteil von zumindest 40 Vol.-% bis 60 Vol.-%, bevorzugt von 45 bis 55 Vol.-% auf. Der rohe und mit Druckgas aufgeschäumte Teig kann eine Dichte von 450 bis 550 kg/m³, z.B. von 500 kg/m³ aufweisen.

Der Teig enthält neben dem Druckgas optional kein zugesetztes Treibmittel. Optional kann in dem Teig Hefe als Geschmacksbildner enthalten sein. Das Druckgas wird dem Teig z.B. bis zu einem Überdruck von bis zu 60 bar, z.B. 10 bis 50 bar oder 10 bis 30 bar zugemischt, z.B. in einem Gewichtsverhältnis von 0,05 bis 2 Gew.-%, bevorzugt von 0,5 bis 1,5 Gew.-% Druckgas im Verhältnis zum Teig. Daraus ergibt sich im Produkt, z.B. Brotteig, ein Gasvolumenanteil von 0,3 bis 80 % bzw. von 0,8 bis 30 %. Das Druckgas kann mittels eines Mischers in den rohen Teig eingemischt werden oder in einem Mischer gemeinsam mit den Inhaltsstoffen des Teigs zu einem rohen, druckgashaltigen Teig gemischt werden. Der Teig kann satzweise, bevorzugt kontinuierlich aus seinen Inhaltsstoffen angemischt werden.

Der Mischer kann ein Rührbehälter, eine Aufschlagmaschine oder ein statischer Mischer in Kombination mit einer Fördereinrichtung sein. Der rohe Teig wird mittels einer Fördereinrichtung, die stromaufwärts oder stromabwärts des Mischers angeordnet sein kann, zur Düse gefördert. Bevorzugt werden der Mischer und die Fördereinrichtung durch einen Extruder gebildet.

Optional kann der Druck des Druckgases in dem rohen Teig durch ein Druckhalteventil gesteuert werden, das vor der Düse angeordnet ist, z.B. zwischen einem Teigmischer oder einer Fördereinrichtung und der Düse angeordnet. Während des Zumischens des Druckgases bis zur Düse wird der Druck in dem rohen Teig bevorzugt aufrechterhalten, insbesondere durch die Düse und/oder durch das Druckhalteventil. Dabei können die Fördereinrichtung und das Druckhalteventil durch eine gesteuerte Pumpe, die bevorzugt abhängig vom Druck des rohen Teigs gesteuert ist, gebildet sein. Bevorzugt ist die gesteuerte Pumpe eine Zahnradpumpe.

Optional kann der Teig kontinuierlich aus seinen Inhaltsstoffen angemischt werden, gleichzeitig oder anschließend kontinuierlich mit Druckgas vermischt werden und direkt anschließend kontinuierlich zum Aufschäumen durch die Düse gefördert werden und in dem anschließenden Durchflusskanal entspannt und mittels des durch die Elektroden eingebrachten elektrischen Stroms erwärmt werden.

Die Eigenschaft des rohen Teigs, fließfähig zu sein, liegt bevorzugt darin, dass der rohe Teig nach Beaufschlagung bzw. Mischen mit dem Druckgas mittels der Fördereinrichtung durch die Düse und den Durchflusskanal bewegt werden kann. Der rohe Teig kann z.B. vor dem Einmischen des Druckgases eine Viskosität von 1 bis 1000 Pas, z.B. 10 bis 200 Pas oder 100 bis 120 Pas, bevorzugt 101 bis 103 Pas, z.B. für Brotteig, gemessen bei 30 °C, bevorzugt bei einer Scherrate von 100 /s bis 10 000 /s, z.B. mit einem Kapillarviskosimeter (Rheograph 2002, Göttfert Werkstoff-Prüfmaschinen GmbH, Deutschland) bestimmt, aufweisen.

Der Durchflusskanal kann im Anschluss an die Düse einen konstanten Querschnitt aufweisen. Bevorzugt weist der Durchflusskanal zumindest in dem Abschnitt, in dem die Elektroden angeordnet sind bis zum Auslass einen konstanten Querschnitt auf.

Die Vorrichtung und das damit durchgeführte Verfahren haben den Vorteil, dass die Erwärmung des aufgeschäumten Teigs mittels der mit Strom beaufschlagten Elektroden im Wesentlichen gleichzeitig über dessen gesamten Querschnitt erfolgt, der zwischen den Elektroden liegt und dadurch eine gleichzeitige und schnelle Verfestigung erreicht wird, die zur Ausbildung einer stabilen Matrix auf Stärkebasis führt, in der auch die aus dem Gasvolumen gebildeten Poren stabil sind. Die Expansion des mit dem Druckgas gemischten rohen Teigs durch die Düse in den Durchflusskanal erfolgt erst vor dem unmittelbar anschließenden Abschnitt, in dem die Elektroden angeordnet sind, so dass auch ein aufgeschäumter roher Teig, der keine ausreichende Stabilität aufweist, vor dem Zusammenfallen bzw. im Wesentlichen vor dem Koaleszieren der Gasblasen durch das Erwärmen stabilisiert werden kann. Daher eignet sich das Verfahren auch zur Herstellung von porenhaltigen Lebensmitteln aus stärkehaltigem, glutenfreiem Teig, der kein zugesetztes Protein enthält.

Ein stärkehaltiger Teig kann die folgenden Bestandteile aufweisen oder daraus bestehen:
- 30 bis 60 Gew.-% Mehl,
- 2 bis 5 Gew.-% Salz,
- 0 bis 3 Gew.-% Stabilisator,
- bevorzugt ohne Treibmittel zusätzlich zu dem Druckgas,
- Rest Wasser.

Das Mehl kann Getreidemehl sein, bevorzugt Weizenmehl, Roggenmehl, jeweils optional deren glutenfreie Stärkefraktion, und/oder glutenfreie Stärke, z.B. Reismehl, Buchweizenmehl, Kartoffelstärke, Maismehl, Maisstärke, oder eine Mischung aus zumindest zweien dieser.

Das Druckgas kann CO₂, N₂ und/oder N₂O sein.

Die Erfindung wird nun genauer anhand von Beispielen mit Bezug auf die Figuren beschrieben, die in
- Figur 1 schematisch das Verfahren und in
- Figur 2 A) und B) rohen aufgeschäumten Teig und in C) und D) ein erfindungsgemäß hergestelltes Lebensmittel zeigen.

Gleiche Bezugsziffern bezeichnen funktionsgleiche Elemente.

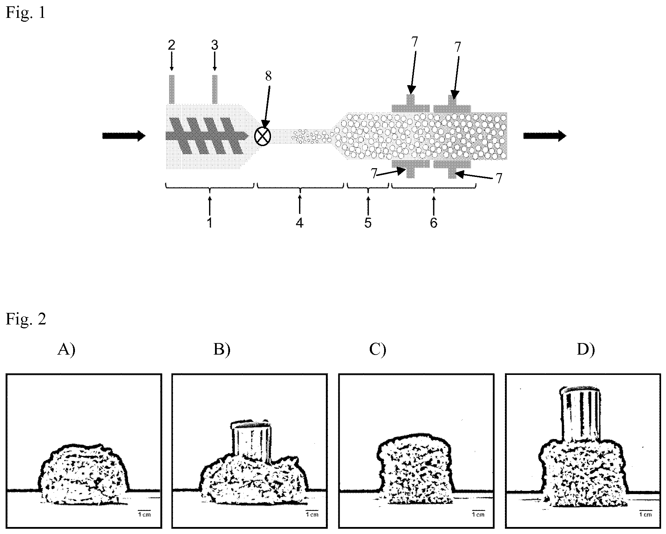

In der Figur 1 werden der Mischer für den Teig und eine Fördereinrichtung durch einen Extruder 1 gebildet, der zumindest einen Einlass 2 für die Bestandteile des Teigs aufweist und einen Einlass 3 zur Zuführung von Druckgas, der mit einer Druckgasquelle verbunden ist. Die Strömungsrichtung des Teigs ist durch die Pfeile angedeutet. Der Extruder 1 mischt die Bestandteile des Teigs zu einem fließfähigen Teig und mischt das Druckgas in den Teig. Der druckgashaltige Teig wird durch den Extruder 1 in die unmittelbar an den Extruderauslass angeschlossene Düse 4 gefördert. Die Düse 4 ist direkt an den Durchflusskanal 5 angeschlossen, der einen größeren Querschnitt als die Düse 4 aufweist und in den sich der druckgashaltige Teig entspannt und aufschäumt. Der Durchflusskanal 5 weist in einem unmittelbar angrenzenden Abschnitt 6 voneinander beabstandete Elektroden 7 auf, die mit Strom beaufschlagt werden, um den aufgeschäumten Teig bis auf eine Temperatur zu erwärmen, bei der die Stärke und/oder das Protein des Teigs eine zum Entformen ausreichende Festigkeit erreichen. Generell kann der Durchflusskanal 5 im Anschluss an die Düse 4 einen runden Querschnitt aufweisen und in dem Abschnitt, in dem die beabstandeten, mit Strom entgegengesetzter Polarität beaufschlagten Elektroden 7 angeordnet sind, einen runden oder eckigen, z.B. viereckigen Querschnitt. Ein Druckhalteventil 8, das zwischen der Düse 4 und dem Mischer angeordnet ist, kann eingerichtet sein, den Druck in dem Mischer bzw. in der Fördereinrichtung zu halten und/oder kann eingerichtet sein, die Geschwindigkeit des Teigs in die Düse 4 und damit den Druckabfall entlang der Düse 4 zu steuern.

### Beispiel 1: Herstellung eines porenhaltigen Lebensmittels auf Basis von Mehl

Als Beispiel für ein porenhaltiges Lebensmittel wurde Brot aus einer glutenfreien Backmischung auf Basis von Weizenstärke hergestellt. Die Backmischung enthielt kein zugesetztes Protein und kein Treibmittel und im Unterschied zur Gebrauchsanweisung wurde keine Hefe zugesetzt. Die Backmischung wurde mit der gleichen Masse Wasser bei 20 °C in einem Mischer für 2 min zu einem Teig angemischt. Der Teig wurde unmittelbar anschließend in einem Behälter mit einer Menge CO₂ als Druckgas versetzt, die bei 20 °C das gleiche Volumen wie der Teig aufwies, und anschließend mittels einer Pumpe durch eine Düse in einen Durchflusskanal konstanten Querschnitts gefördert, dessen Querschnitt von 56 cm² etwa um den Faktor 280 größer war als der Querschnitt von 0,2 cm² der Düse. Im unmittelbaren Anschluss an die Düse waren Edelstahlelektroden an gegenüberliegenden Innenflächen des rechteckigen Durchflusskanals angeordnet, die mit Wechselstrom mit 1,5 kW beaufschlagt waren. Der aufgeschäumte Teig wurde innerhalb von ca. 90 s zwischen den Elektroden auf ca. 80 °C erwärmt. Die elektrische Leistung war so eingestellt, dass sich eine Erwärmungsrate von ca. 20 bis 60 °C/min ergab.

Nach der Erwärmung war das porenhaltige Lebensmittel für eine Entformung ausreichend stabil und zeigte auch bei einer anschließenden Lagerung Stabilität, insbesondere eine gleichmäßige Verteilung von Poren über den Querschnitt der Teigmatrix. Die Poren hatten Größen im Bereich von 150 bis 4000 µm und entsprachen daher Poren in herkömmlichem Weißbrot.

### Beispiel 2: Herstellung eines porenhaltigen Lebensmittels auf Basis von Mehl

Als Beispiel für ein porenhaltiges Lebensmittel wurde Brot aus einem Teig, der wie in Beispiel 1 hergestellt und mit CO₂ als Druckgas aufgeschäumt wurde, durch Beaufschlagung mit Strom einer Leistung von 1,5 kW in 180 s auf 100°C erwärmt. Das so hergestellte Lebensmittel wurde auf 20°C abkühlen gelassen und zu einem Würfel von 5 x 5 x 5 cm Kantenlänge geschnitten. Die Formstabilität wurde durch Belasten des würfelförmigen Lebensmittels mit einem zylindrischen Gewicht von 420 g mit dessen flacher Endfläche (3,5 cm Durchmesser) bestimmt. Das Gewicht drückte das Lebensmittel um ca. 5% seiner Höhe ein, gemessen als Bewegung des Gewichts vom kraftlosen Berühren der oberen Fläche des Lebensmittels bis zum Stillstand der Senkbewegung, was eine ausreichende Formstabilität des Lebensmittels zeigt.

Die Figur 3 zeigt in A), dass der aufgeschäumte rohe Teig 10, der nach der Entspannung durch die Düse aus dem Durchflusskanal entnommen wurde, bei 20°C ohne Belastung nicht formstabil ist. In B) ist gezeigt, dass derselbe aufgeschäumte rohe Teig 10 bei Belastung durch das 420 g Gewicht 11 nicht formstabil ist, sondern sich ausbreitet und das Gewicht 11 einsinken lässt. In Figur 3 C) ist das etwa würfelförmig geschnittene Lebensmittel 12 ohne Belastung dargestellt, in D) unter der Belastung durch das aufgelegte 420 g Gewicht. Die Figuren C) und D) zeigen, dass das erfindungsgemäß hergestellte Lebensmittel eine ausreichende Formstabilität hat.

## Patentansprüche

1. Verfahren zur Herstellung eines porenhaltigen Lebensmittels, das eine stärkehaltige Matrix um die Poren aufweist, durch Herstellen eines gashaltigen stärkehaltigen rohen Teigs und Erwärmen des rohen Teigs, wobei der rohe Teig fließfähig ist und mit Druckgas vermischt ist, **dadurch gekennzeichnet, dass** der rohe Teig durch eine Düse (4) in einen unmittelbar angrenzenden Durchflusskanal (5) entspannt wird und zum Erwärmen in einem anschließenden Abschnitt des Durchflusskanals (5) durch zumindest zwei am Umfang des Durchflusskanals (5) angeordneten Elektroden (7) kontaktiert und mit Strom beaufschlagt wird, bis der Teig zumindest eine Temperatur erreicht, bei der er zum Ausformen aus dem Durchflusskanal (5) stabil ist.

2. Verfahren nach Anspruch 1, **dadurch gekennzeichnet, dass** der rohe Teig kontinuierlich durch Mischen seiner Bestandteile erzeugt wird.

3. Verfahren nach Anspruch 1, **dadurch gekennzeichnet, dass** der rohe Teig satzweise durch Mischen seiner Bestandteile erzeugt wird.

4. Verfahren nach einem der voranstehenden Ansprüche, **dadurch gekennzeichnet, dass** der Teig glutenfrei ist, die Stärkebasis die glutenfreie Stärkefraktion von Roggenmehl, die glutenfreie Stärkefraktion von Weizenmehl, Buchweizenmehl, Reismehl, Maismehl oder eine Mischung von zumindest zweien dieser ist und der Teig kein zugesetztes Protein enthält.

5. Verfahren nach einem der voranstehenden Ansprüche, **dadurch gekennzeichnet, dass** die Bestandteile des rohen Teigs gemeinsam mit dem Druckgas gemischt werden.

6. Verfahren nach einem der Ansprüche 1 bis 3, **dadurch gekennzeichnet, dass** die Bestandteile des rohen Teigs gemischt werden und anschließend das Druckgas in den rohen Teig eingemischt wird.

7. Verfahren nach einem der voranstehenden Ansprüche, **dadurch gekennzeichnet, dass** der Querschnitt des Durchflusskanals (5) konstant ist.

8. Verfahren nach einem der voranstehenden Ansprüche, **dadurch gekennzeichnet, dass** der Querschnitt des Durchflusskanals (5) um einen Faktor von 100 bis 200 größer als der Querschnitt der Düse (4) ist.

9. Verfahren nach einem der voranstehenden Ansprüche, **dadurch gekennzeichnet, dass** das Druckgas in dem rohen Teig vor Durchtritt durch die Düse (4) von einem Druckhalteventil (8) gehalten wird, das zwischen der Fördereinrichtung und der Düse (4) angeordnet ist.

10. Verfahren nach einem der voranstehenden Ansprüche, **dadurch gekennzeichnet, dass** das Druckgas bis zu einem Überdruck von 10 bis 60 bar in den rohen Teig eingemischt wird.

11. Verfahren nach einem der voranstehenden Ansprüche, **dadurch gekennzeichnet, dass** die Düse (4) für einen Druckabfall von zumindest 60 bar/min in dem Durchflusskanal (5) eingerichtet ist.

12. Verfahren nach einem der voranstehenden Ansprüche, **dadurch gekennzeichnet, dass** Rate des Druckabfalls für den mit dem Druckgas vermischten Teig durch die Düse und/oder die Geschwindigkeit des Teigs durch den Abschnitt des Durchflusskanals, in dem die Elektroden angeordnet sind, durch eine vor der Düse angeordnete Fördereinrichtung und/oder durch ein Ventil (8) gesteuert wird.

13. Verfahren nach einem der voranstehenden Ansprüche, **dadurch gekennzeichnet, dass** die Temperatur, bei der der Teig zum Ausformen aus dem Durchflusskanal (5) stabil ist, die Verkleisterungstemperatur der Stärke ist.

14. Verfahren nach einem der voranstehenden Ansprüche, **dadurch gekennzeichnet, dass** in einem Abschnitt des Durchflusskanals (5), der stromabwärts der Elektroden (7) liegt, Dampf durch Austrittsöffnungen in der Wand des Durchflusskanals (5) austritt.

15. Vorrichtung zur Verwendung in einem Verfahren nach einem der voranstehenden Ansprüche zur Herstellung eines porösen Lebensmittels, das eine stärkehaltige Matrix um die Poren aufweist, mit einem Teigmischer (1), einer Einrichtung zur kontinuierlichen Erwärmung eines Teigs, einem Mischer (1), der zum Einmischen von Druckgas in einen Teig eingerichtet ist und einer Fördereinrichtung, die eingerichtet ist, den mit dem Druckgas gemischten Teig durch eine an die Fördereinrichtung angeschlossene Düse (4) zu fördern, **dadurch gekennzeichnet, dass** ein Durchflusskanal (5) an die Düse (4) unmittelbar angrenzt, der einen Querschnitt aufweist, in den sich der mit dem Druckgas gemischte Teig entspannt, wobei die Einrichtung zur kontinuierlichen Erwärmung ein anschließender Abschnitt des Durchflusskanals (5) ist, in dem zumindest zwei am Umfang des Durchflusskanals (5) angeordnete Elektroden (7) angeordnet und mit Strom beaufschlagt sind.

16. Vorrichtung nach Anspruch 15, **dadurch gekennzeichnet, dass** der Mischer und die Fördereinrichtung durch einen Extruder (1) gebildet sind, an dem eine Druckgasquelle angeschlossen ist.

17. Vorrichtung nach einem der Ansprüche 15 bis 16, **dadurch gekennzeichnet, dass** zwischen der Fördereinrichtung und der Düse (4) ein Druckhalteventil (8) angeordnet ist.

18. Vorrichtung nach einem der Ansprüche 15 bis 17, **dadurch gekennzeichnet, dass** die Elektroden (7) mit einer Stromquelle verbunden sind, die eine Leistung aufweist, die ausreicht, den Teig innerhalb von maximal 5 min auf eine Temperatur im Bereich von 72°C bis 120 °C zu erwärmen.

## Claims

1. Process for producing a pore-containing food having a starch-containing matrix around the pores by producing a gaseous starch-containing raw dough and heating the raw dough, wherein the raw dough is flowable and is mixed with pressurized gas, **characterized in that** the raw dough is expanded through a nozzle (4) into an immediately adjacent flow-through channel (5), and for heating in a subsequent section of the flow-through channel (5) is contacted by at least two electrodes (7) arranged on the circumference of the flow-through channel (5) and current applied until the dough reaches at least a temperature at which it is stable for demoulding out of the flow-through channel (5).

2. Process according to claim 1, **characterized in that** the raw dough is produced continuously by mixing of its components.

3. Process according to claim 1, **characterized in that** the raw dough is produced in batches by mixing its components.

4. Process according to one of the preceding claims, **characterized in that** the dough is gluten-free, the starch base is the gluten-free starch fraction of rye flour, the gluten-free starch fraction of wheat flour, buckwheat flour, rice flour, corn flour or a mixture of at least two of these and the dough contains no added protein.

5. Process according to one of the preceding claims, **characterized in that** the ingredients of the raw dough are mixed together with the pressurized gas.

6. Process according to one of claims 1 to 3, **characterized in that** the ingredients of the raw dough are mixed and subsequently the pressurized gas is mixed into the raw dough.

7. Process according to one of the preceding claims, **characterized in that** the cross-section of the flow-through channel (5) is constant.

8. Process according to one of the preceding claims, **characterized in that** the cross-section of the flow-through channel (5) is larger than the cross section of the nozzle (4) by a factor of 100 to 200.

9. Process according to one of the preceding claims, **characterized in that** the pressurized gas prior to passing through the nozzle (4) is held in the raw dough by a pressure-sustaining valve (8) which is arranged between the conveyor and the nozzle (4).

10. Process according to one of the preceding claims, **characterized in that** the pressurized gas is mixed into the raw dough up to an overpressure of 10 to 60 bar.

11. Process according to one of the preceding claims, **characterized in that** the nozzle (4) is configured for a pressure drop of at least 60 bar/min in the flow-through channel (5).

12. Process according to one of the preceding claims, **characterized in that** the rate of pressure drop through the nozzle for the dough mixed with the pressurized gas and/or the speed of the dough through the section of the flow-through channel in which the electrodes are arranged, is controlled by a conveyor device arranged in front of the nozzle and/or by a valve (8).

13. Process according to one of the preceding claims, **characterized in that** the temperature at which the dough is stable for demoulding out of the flow-through channel (5) is the gelatinization temperature of the starch.

14. Process according to one of the preceding claims, **characterized in that** steam exists through outlet openings in the wall of the flow-through channel (5) in a section of the flow-through channel (5) which is downstream of the electrodes (7).

15. Device for use in a process according to one of the preceding claims for producing a porous foodstuff having a starch-containing matrix around the pores, with a dough mixer (1), a device for continuously heating a dough, a mixer (1) which is configured for mixing pressurized gas into a dough, and a conveyor device which is configured to convey the dough mixed with the pressurized gas through a nozzle (4) connected to the conveyor device, **characterized in that** at the nozzle (4) a flow-through channel (5) is immediately adjacent which has a cross-section into which the dough mixed with the pressurized gas expands, wherein the device for continuous heating is a subsequent section of the flow-through channel (5) in which at least two electrodes (7) are arranged to which current is applied are arranged on the circumference of the flow-through channel (5).

16. Device according to claim 15, **characterized in that** the mixer and the conveyor are formed by an extruder (1) to which a pressurized gas source is connected.

17. Device according to one of claims 15 to 16, **characterized in that** a pressure-sustaining valve (8) is arranged between the conveyor device and the nozzle (4).

18. Device according to one of claims 15 to 17, **characterized in that** the electrodes (7) are connected to a current source having a power which is sufficient to heat the dough within at maximum 5 min to a temperature in the range from 72 °C to 120 °C.

## Revendications

1. Procédé de production d'un aliment contenant des pores, qui présente une matrice amylacée autour des pores, par la production d'une pâte crue amylacée contenant du gaz et le chauffage de la pâte crue, la pâte crue pouvant s'écouler et étant mélangée avec du gaz comprimé, **caractérisé en ce que** la pâte crue est détendue à travers une buse (4) dans un passage d'écoulement (5) immédiatement contigu et, afin de la chauffer, contactée et mise sous courant par deux électrodes (7) disposés sur la périphérie du passage d'écoulement (5) dans une section suivante du passage d'écoulement (5), jusqu'à ce que la pâte atteigne au moins une température à laquelle elle est stable pour être façonnée depuis le passage d'écoulement (5).

2. Procédé selon la revendication 1, **caractérisé en ce que** la pâte crue est produite de façon continue par le mélange de ses ingrédients.

3. Procédé selon la revendication 1, **caractérisé en ce que** la pâte crue est produite par lots par le mélange de ses ingrédients.

4. Procédé selon l'une des revendications précédentes, **caractérisé en ce que** la pâte est sans gluten, la base d'amidon est la fraction d'amidon sans gluten de la farine de seigle, la fraction d'amidon sans gluten de la farine de blé, de sarrasin, de riz, de maïs ou un mélange d'au moins deux de celles-ci et la pâte ne contient aucune protéine ajoutée.

5. Procédé selon l'une des revendications précédentes, **caractérisé en ce que** les ingrédients de la pâte crue sont mélangés ensemble avec le gaz comprimé.

6. Procédé selon l'une des revendications 1 à 3, **caractérisé en ce que** les ingrédients de la pâte crue sont mélangés et, par la suite, le gaz comprimé est mélangé à la pâte crue.

7. Procédé selon l'une des revendications précédentes, **caractérisé en ce que** la section transversale du passage d'écoulement (5) est constante.

8. Procédé selon l'une des revendications précédentes, **caractérisé en ce que** la section transversale du passage d'écoulement (5) est supérieure à la section transversale de la buse (4) d'un facteur de 100 à 200.

9. Procédé selon l'une des revendications précédentes, **caractérisé en ce que** le gaz comprimé est retenu dans la pâte crue avant le passage à travers la buse (4) par une valve de maintien de pression (8) disposée entre l'appareil de convoyage et la buse (4).

10. Procédé selon l'une des revendications précédentes, **caractérisé en ce que** le gaz comprimé est mélangé à la pâte crue jusqu'à une pression positive de 10 à 60 bar.

11. Procédé selon l'une des revendications précédentes, **caractérisé en ce que** la buse (4) est adaptée à une baisse de pression d'au moins 60 bar/min dans le passage d'écoulement (5).

12. Procédé selon l'une des revendications précédentes, **caractérisé en ce qu'**un taux de la baisse de pression pour la pâte mélangée avec le gaz comprimé à travers la buse et/ou la vitesse de la pâte à travers la section du passage d'écoulement dans laquelle les électrodes sont disposés sont contrôlés par un appareil de convoyage disposé avant la buse et/ou par une valve (8).

13. Procédé selon l'une des revendications précédentes, **caractérisé en ce que** la température à laquelle la pâte est stable pour le façonnage depuis le passage d'écoulement (5) est la température de gélatinisation de l'amidon.

14. Procédé selon l'une des revendications précédentes, **caractérisé en ce que**, dans une section du passage d'écoulement (5) en aval des électrodes (7), il sort de la vapeur par des ouvertures de sortie dans la paroi du passage d'écoulement (5).

15. Dispositif d'utilisation dans un procédé selon l'une des revendications précédentes pour la production d'un aliment poreux, qui présente une matrice amylacée autour des pores, avec un mélangeur de pâte (1), un appareil de chauffage continu d'une pâte, un mélangeur (1) adapté à mélanger du gaz comprimé à une pâte et un appareil de convoyage adapté à convoyer la pâte mélangée avec le gaz comprimé à travers une buse (4) raccordée à l'appareil de convoyage, **caractérisé en ce qu'**un passage d'écoulement (5) est immédiatement contigu à la buse (4), lequel a une section transversale dans laquelle la pâte mélangée avec le gaz comprimé se détend, l'appareil de chauffage continu étant une section suivante du passage d'écoulement (5) dans laquelle au moins deux électrodes (7) sont disposés sur la périphérie du passage d'écoulement (5) et mis sous courant.

16. Dispositif selon la revendication 15, **caractérisé en ce que** le mélangeur et l'appareil de convoyage sont formés par une extrudeuse (1) à laquelle une source de gaz comprimé est raccordée.

17. Dispositif selon les revendications 15 à 16, **caractérisé en ce qu'**une valve de maintien de pression (8) est disposée entre l'appareil de convoyage et la buse (4).

18. Dispositif selon les revendications 15 à 17, **caractérisé en ce que** les électrodes (7) sont reliés à une source de courant ayant une puissance suffisante pour chauffer la pâte en au maximum 5 min à une température dans une plage de 72°C à 120 °C.
